# EUROPEAN PATENT APPLICATION

(11) **EP 3 708 329 A1**
(43) Date of publication of application: **16.09.2020**
(21) Application number: 20162332.9
(22) Date of filing: 11.03.2020
(51) Int. Cl.: B29C 45/00, A01G 9/029, A01G 9/04, B65D 1/36, B65D 85/52

(54) **MULTI-COMPARTMENT TRAY**

(30) Priority: 14.03.2019 GB 201903475
(71) Applicant: Plantopia Ltd, Colne, Lancashire BB8 0BP (GB)
(72) Inventor: Haley, Christopher, Claughton on Brock, Lancashire PR3 0QL (GB)
(74) Representative: Brooke-Jones, Helen Anne

(57) **Abstract**

The present invention comprises a multi-compartment tray (10, 100) comprising a top wall (11, 101) and a plurality of open-topped compartments (20, 120) depending downwardly therefrom. Each compartment (20, 120) comprises a base (21, 121), at least one side wall (22, 122) and an open top(23, 123). The tray (10, 100) comprises a channel (30, 130) extending between each adjacent compartment (20, 120). Each channel (30, 130) comprises a v-shape and a bracing rib (40, 140) extending thereacross, said bracing rib (40, 140) comprising a tetrahedron shape.

## Description

### BACKGROUND

### Technical Field

The present invention relates generally to the field of multi-compartment tray. More particularly, but not exclusively, the present invention concerns a multi-compartment tray for planting, plant pot carrying and marketing.

### Description of the Related Art

There are numerous moulded multi-compartment trays on the market used in the horticultural industry for planting, plant pot carrying and marketing, in addition to cup carriers for take-away drinks. Both industries face challenges with the known trays on the market.

With the horticultural industry, many of the trays do not have the required rigidity to pass through the machinery that will load the trays. Furthermore, they are typically lacking in strength when fully loaded. Once way to tackle the strength and rigidity issue is to use additional moulding material to bolster the strength, but in the current climate of wastage-reduction, this is not advantageous.

In the drinks industry/ cafe culture, cup carrying trays again, do not have the required rigidity when fully loaded due to insufficient support between compartments and resulting in bending an breaking. Again, additional moulding material is often used to provide stronger trays.

One solution to adding strength to such trays is to provide strengthening bridges between compartments within the tray. However, the method of moulding trays with such structures, presents a challenge in itself. In the plastics field, forming bridging structures is not possible in thermoforming, where a plastic sheet is heated to a pliable forming temperature, formed to a specific shape in a mould, and trimmed to create a usable product. Likewise, pulp-moulding processes are almost impossible to create bridges. Injection moulding, where molten material is injected into a mould, can be used to form shallow bridges, but these can lack in strength.

With additional moulding material in the trays, there comes a further problem when storing and transporting empty trays, where they are often incapable of nesting together.

There remains a challenge to provide strong, rigid multi-compartment trays that tackle the issue of material reduction, whilst making the manufacturing process possible and as simple as possible.

It is an object of the present invention to address one or more of the problems of the prior art as discussed herein or otherwise.

Therefore, it is now desired to provide an improved multi-compartment tray, particularly, although not exclusively, for planting.

### SUMMARY OF THE INVENTION

According to the invention there is provided a multi-compartment tray comprising a top wall and a plurality of open-topped compartments depending downwardly therefrom, wherein each compartment comprises a base, at least one side wall and an open top, wherein the tray comprises a channel extending between each adjacent compartment, characterised in that each channel comprises a v-shape and a bracing rib extending thereacross, said bracing rib comprising a tetrahedron shape.

By providing a v-shaped channel between compartments, a triangular cross-section is provided, which is apt to accommodate a tetrahedron (otherwise known as a triangular pyramid) bracing rib to extend thereacross. The bracing ribs bridge across the channels to keep the channels in the required v-shape. The combination of the channel and the bracing rib provide a number of advantages: (a) either injection moulding or pulp-moulding can be utilised, (b) a reduced amount of material can be used to provide a strong tray, and (c) a strong triangular-pyramidal rib optimises the strength provided between the compartments to minimise bending of the tray in use and when loaded.

Preferably, the bracing ribs are arranged substantially perpendicularly to the direction of the channel. By this, we mean substantially perpendicularly to a valley or base of the channel.

Preferably, each channel comprises a single bracing rib. Alternatively, each channel may comprise more than one bracing rib arranged substantially parallel to one another across a channel.

Preferably, the bracing ribs are arranged approximately equidistantly from each of two ends of the respective channel.

Preferably, the bracing ribs extend only part way up a pair of side walls of the respective channel from a valley or base thereof. Preferably, the bracing ribs extend approximately half way up a pair of side walls of the respective channel from a valley or base thereof.

Preferably, the rib comprises an isosceles tetrahedron, most preferably, an acute isosceles tetrahedron. Preferably, a vertex angle of each triangle within the tetrahedron comprises less than 60 degrees, more preferably, between approximately 10 degrees and approximately 40 degrees, most preferably, between approximately 20 degrees and approximately 30 degrees.

Preferably, therefore, each of two base angles of each triangle within the tetrahedron comprises greater than 60 degrees.

By isosceles tetrahedron, we mean a tetrahedron made from identical isosceles triangles, each triangle comprising two equal sides and a base. By vertex angle, we mean the angle formed by two equal sides of each isosceles triangle within the tetrahedron. By base angle, we mean the two equal angles formed between two equal sides and a base of the isosceles triangle.

Preferably, one edge of each bracing rib corresponds with the valley or base of the channel. Most preferably, a short edge formed by two bases of the isosceles triangles therein corresponds with the valley or base of the channel. Preferably, two triangular faces of each bracing rib form part of the side walls of the channel. Preferably, two triangular faces of each bracing rib are exposed. Preferably, exposed edges of the bracing rib are rounded off/ blunted. By this we mean any edges between the two exposed triangular faces and/ or the meeting with the side walls of the channel.

The bracing ribs may be solid. By this we mean not hollow or containing spaces or gaps.

Most preferably, the bracing ribs comprise a hollow in an underside thereof. Preferably, the hollow removes a portion of the body of the bracing rib with a portion of the valley or base and a portion of the adjacent side walls of the channel.

Preferably, the trays are configured to be closely nested with at least one another such tray. Preferably, therefore, an exposed portion of a bracing rib is configured to at least partially nestle within the hollow in an underside of a bracing rib of another tray.

Preferably, one or more channels comprise a pair of apertures arranged either side of the respective bracing rib. Preferably, the apertures are centralised on the valley or base of the channel. Preferably, the apertures remove a small portion of the side walls either side of the valley or base. Preferably, the apertures are configured to facilitate passage of air and liquid therethrough.

Preferably, the side walls of the channel comprise equal pitch depending downwardly from the top wall of the tray. Preferably, the side walls create an angle of less than 60 degrees, more preferably, between approximately 10 degrees and approximately 40 degrees, most preferably, between approximately 20 degrees and approximately 30 degrees. However, the side walls create an angle that is the same as that provided by the vertex angle of the tetrahedron rib.

Preferably, the side walls converge in the valley or base before they reach the level of the bases of the compartments, e.g. the channels are shallower than the compartments. Preferably, the valley or base of the channels is located approximately half way down the side walls of the compartments.

Preferably, each end of a channel is open to the respective compartments. Preferably, the ends of each channel provide an opening in a side wall of a compartment.

Preferably, each compartment comprises a link to at least two other adjacent compartments, via said channels. It is to be appreciated that the number of links will depend upon the configuration of compartments within a tray.

Preferably, the top wall comprises a substantially planar surface. The planar surface may be substantially of rectangular or square.

Preferably, the top wall comprises a continuous, downwardly-deflected lip around an outer periphery.

Preferably, the top wall, lip, compartments and channels comprise substantially the same thickness of material. The thickness of material may be between approximately 0.5 mm and approximately 3 mm thick, most preferably, approximately 1 mm thick.

Preferably, each compartment comprises a generally circular configuration with a circular base and top end and a single curved inwardly tapering side wall (from the open top to the base). Alternatively, the compartments may be substantially cuboidal and tapered from the top end to the base. In this case, there may be a plurality of tapering planar side walls.

Preferably, the compartments are arranged in a regular linear configuration, e.g. 2x2 or 2x3. Alternatively, the compartments are arranged in a non-linear configuration.

Preferably, the tray comprises a planting tray. Preferably, the compartments comprise a depth from the top end to the base adapted to accommodate plants in soil.

Preferably, the tray comprises a carry tray for drinking cups. Preferably, the compartments comprise a depth from the top end to the base adapted to sufficiently support a drinking cup carried therein.

Preferably, the tray is re-useable. Preferably, the tray is recyclable.

Preferably, the tray comprises plastics. Preferably, the tray is formed by injection moulding.

Preferably, the tray comprises pulp. Preferably, the tray is formed by pulp moulding.

### BRIEF DESCRIPTION OF THE DRAWINGS

For a better understanding of the invention, and to show how exemplary embodiments may be carried into effect, reference will now be made to the accompanying drawings in which:
Figure 1 is a perspective top view of a first embodiment of a multi-compartment tray according to the invention;
Figure 2 is a schematic plan view of a top wall of the tray according to Figure 1;
Figure 3 is a schematic side view of a long side of the tray according to Figure 1;
Figure 4 is a perspective cross-section view of a long side of the tray of Figure 1;
Figure 5 is a schematic cross-section view of a long side of the tray of Figure 1;
Figure 6 is a schematic cross-section view of a short end of the tray of Figure 1;
Figure 7 is a perspective base view of the tray according to Figure 1;
Figure 8 is a perspective top view of a second embodiment of a multi-compartment tray according to the invention;
Figure 9 is a schematic plan view of a top wall of the tray according to Figure 8;
Figure 10 is a schematic side view of a long side of the tray according to Figure 8;
Figure 11 is a schematic side view of a short end of the tray according to Figure 8; and
Figure 12 shows a schematic plan view of a v-shaped channel and a tetrahedron bracing rib.

### DETAILED DESCRIPTION OF THE EXEMPLARY EMBODIMENTS

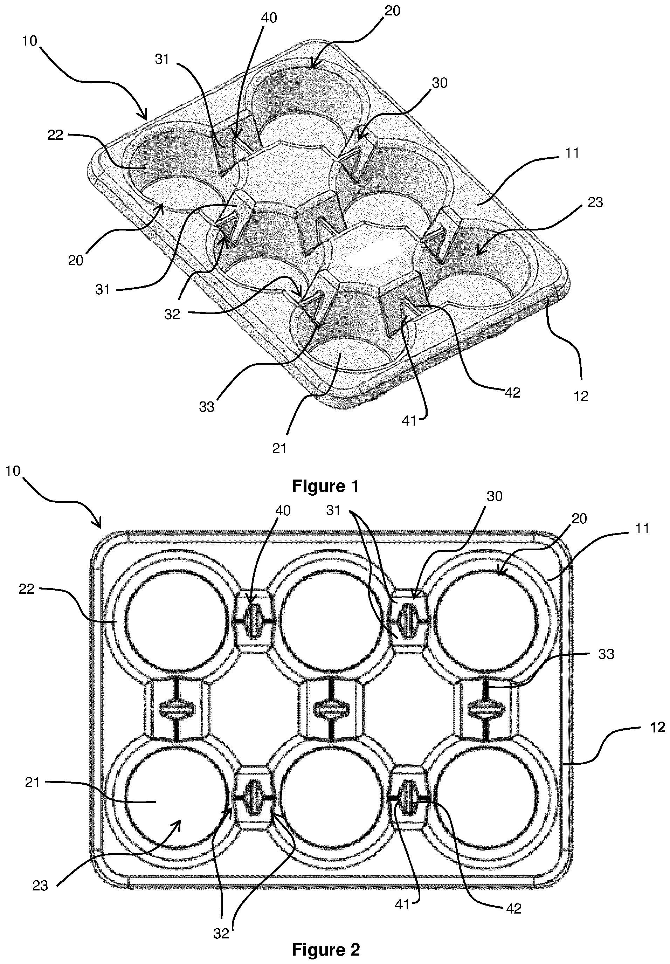

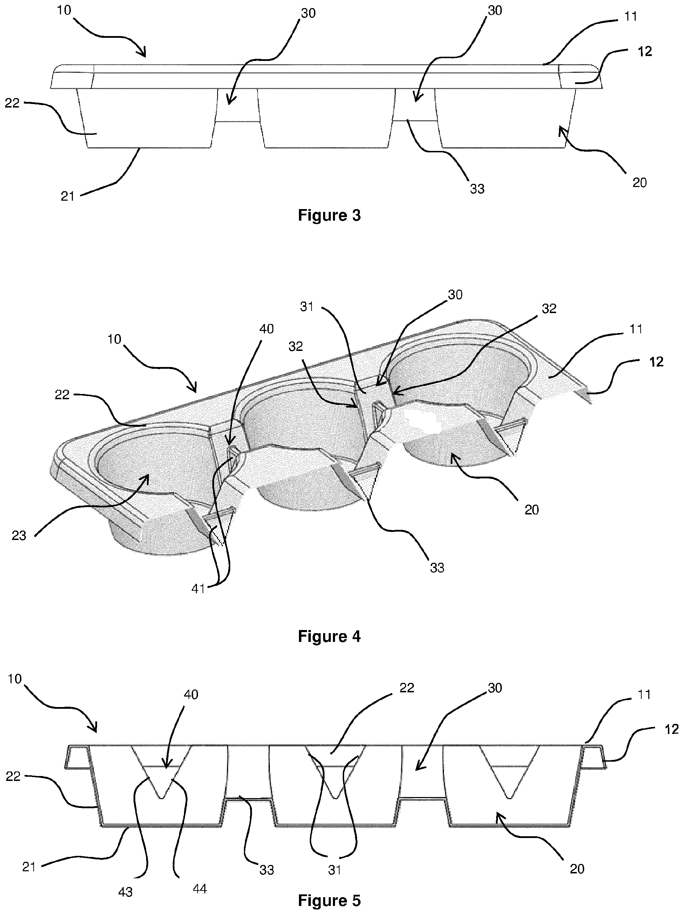

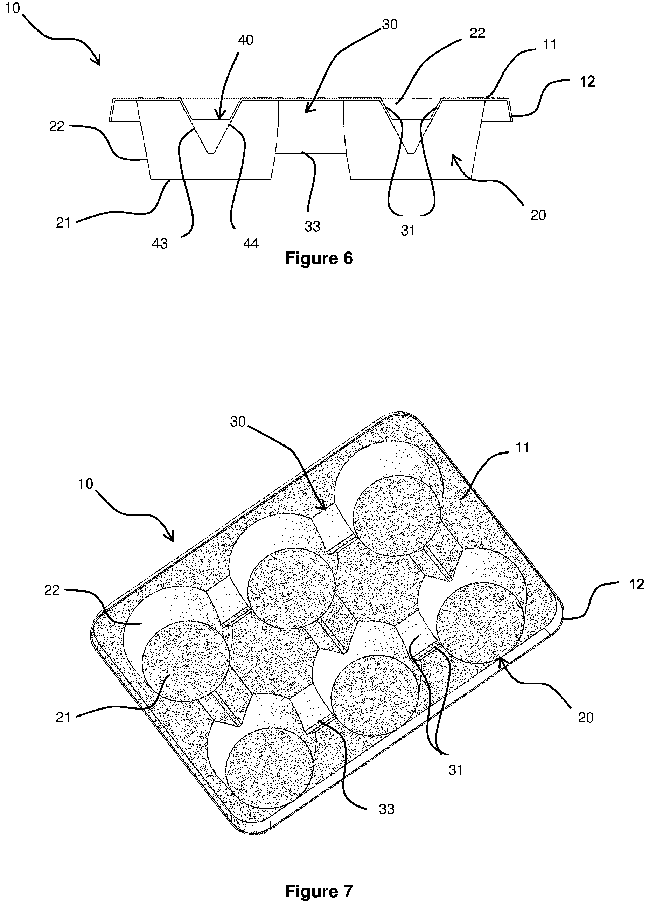

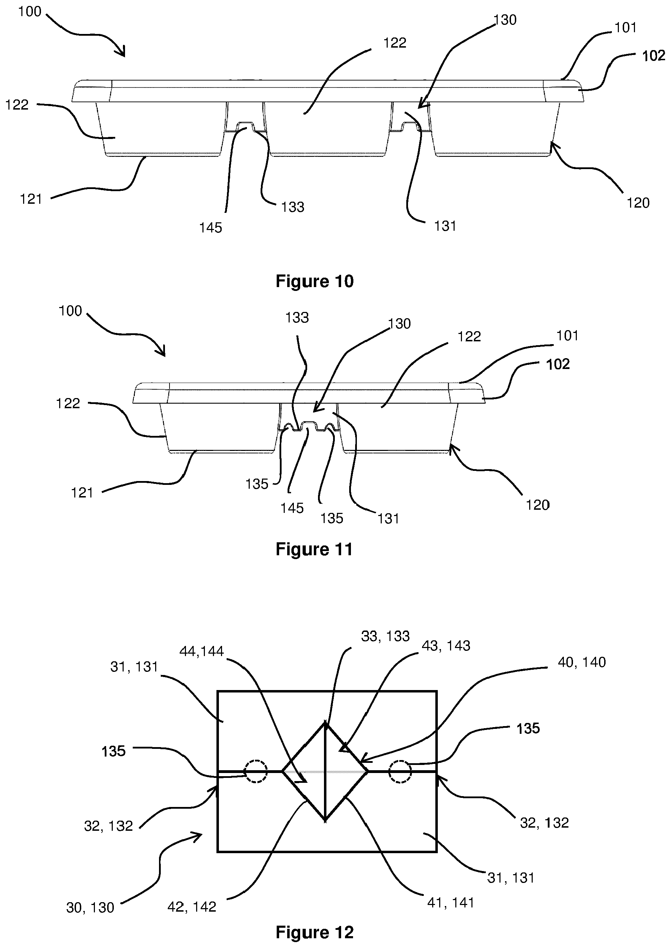

As shown in Figures 1 to 12, the invention relates to a multi-compartment tray 10, 100 comprising a top wall 11, 101 and a plurality of compartments 20, 120 depending downwardly therefrom, wherein each compartment 20, 120 comprises a base 21, 121, at least one side wall 22, 122 and an open top 23, 123, wherein the tray 10, 100 comprises a channel 30, 130 extending between each adjacent compartment 20, 120, characterised in that the channels 30, 130 comprise a v-shape and a bracing rib 40, 140 thereacross, said bracing rib 40, 140 comprising a tetrahedron shape.

The top wall 11, 101 comprises a substantially planar surface and in the embodiments shown, is of rectangular shape. It is to be appreciated that a square shape may be easily adopted as the top wall 11, 101, as may other shapes. A continuous downwardly deflected lip 12, 102 is provided around an outer periphery of the top wall 11, 101 to provide additional rigidity.

In the embodiments shown, each compartment 20, 120 comprises a generally circular configuration with a circular base 21, 121 and a single curved inwardly tapering side wall 22, 122 (from the open top 23, 123 to the base 22, 122), which eases removal of added contents.

The compartments 20, 120 are generally arranged in a regular linear 2x2 or 2x3 configurations. However, it is to be appreciated that other larger trays may be provided with a greater number of compartments arranged in non-linear configurations as to suit the shape of the top wall.

Each v-shaped channel 30, 130 comprises a pair of downwardly directed, converging side walls 31, 131 of equal pitch and length. The side walls 31, 131 converge in a valley 33, 133 before they reach the level of the bases 21, 121 of the compartments 20, 120. Ideally, the channels 30, 130 depend only approximately half way down the side walls 22, 122 of the compartments 20, 120. The channels 30, 130 provide a link between adjacent compartments 20, 120 via open ends 32, 132 in the side walls 22, 122 of the compartments 20, 120.

The top wall 11, 101, lip 12, 102, compartments 20, 120 and channels 30, 130 typically have substantially the same thickness, which in a plastics moulded embodiment is intended to be approximately 1 mm thick.

Each bracing rib 40, 140 is arranged transverse to the direction of the channel 30, 130, approximately equidistant from each open end 32, 132 of the respective channel 30, 130. The ribs 40, 140 reach only part way up the side walls 31, 131 of the channel 30, 130.

By virtue of the tetrahedron-shape adopted, each bracing rib 40, 140 nominally comprises four triangular faces 41-44, 141-144 defining six edges and four vertices. One edge of the tetrahedron rib 40, 140 corresponds with the valley 33, 133 of the channel 30, 130, whilst two of the triangular faces 43, 44, 143, 144 essentially form part of the side walls 31, 131 of the channel 30, 130. This leaves two triangular faces 41, 42, 141, 142 exposed. Any exposed edges of the tetrahedron bracing rib 40, e.g. the edge between the two triangular faces 41, 42, 141, 142 and the meeting with the ide walls 31, 131 of the channel 30, 130, are rounded off/ blunted for ease of moulding and extraction of the tray 10, 100 during the manufacturing process.

In a preferred embodiment, each bracing rib 40, 140 nominally comprises four acute isoceles faces 41-44, 141-144 defining six edges and four vertices. A vertex angle of each isosceles face comprises between approximately 20 degrees and approximately 30 degrees. In this case, a short edge of the tetrahedron rib 40, 140 corresponds with the valley 33, 133 of the channel 30, 130.

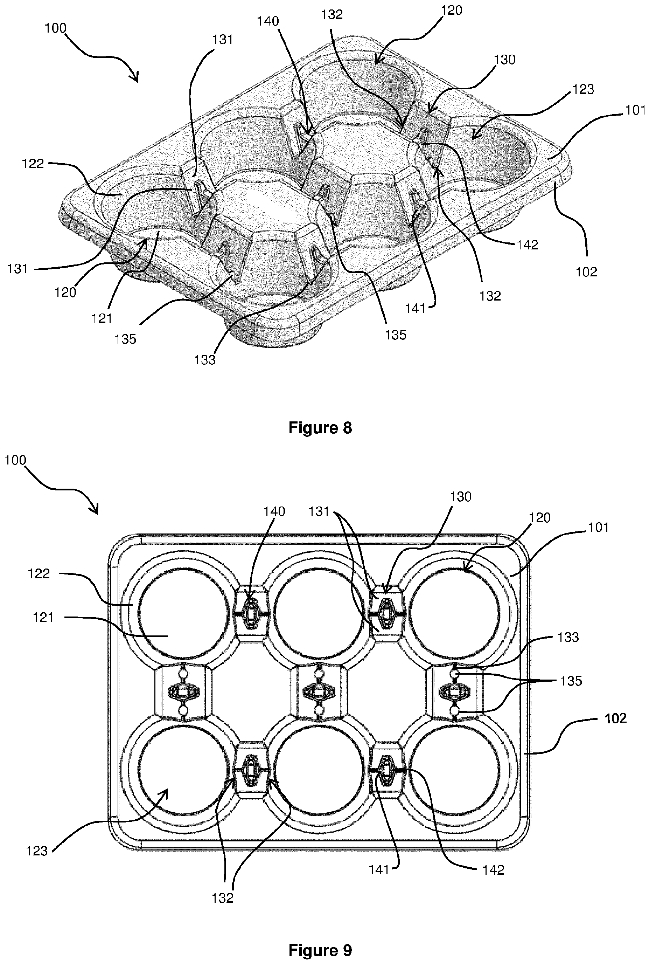

In the second embodiment shown in Figures 8 to 11, material has been removed from an underside of the ribs 140. The ribs 140 are therefore, partially solid, with a hollow 145 created in a body of the rib 140 in an underside of the channel 130. Furthermore, a pair of apertures 135 (generally circular) is provided on either side of the rib 140 located centrally across the apex 133 of the channel 130 on a number of the channels 130. The hollow 145 and the apertures 135 serve a number of purposes, those being to provide drainage from the tray 100 if liquid within the compartments 20, 120 rises above a certain level being the base of the channel 133 of the channel 130 (also retains some water with planting trays), but also to reduce material usage in the manufacturing process and to facilitate nesting and dislodging of the trays 100. When nested, a rib 140 of a lower tray 100 can sit within the hollow 145 of an upper tray 100. The apertures 135 can facilitate escape and influx of air during nesting and dislodging respectively, which prevents a pillow/ vacuum from forming, which would hinder the process of nesting and removal.

Although a few preferred embodiments have been shown and described, it will be appreciated by those skilled in the art that various changes and modifications might be made without departing from the scope of the invention.

## Claims

1. A multi-compartment tray comprising a top wall and a plurality of open-topped compartments depending downwardly therefrom, wherein each compartment comprises a base, at least one side wall and an open top, wherein the tray comprises a channel extending between each adjacent compartment, **characterised in that** each channel comprises a v-shape and a bracing rib extending thereacross, said bracing rib comprising a tetrahedron shape.

2. The tray according to claim 1, wherein the bracing ribs are arranged substantially perpendicularly to the direction of the channel.

3. The tray according to any one of claims 1 or 2, wherein each channel comprises a single bracing rib.

4. The tray according to any one of claims 1 to 3, wherein the bracing ribs are arranged approximately equidistantly from each of two ends of the respective channel.

5. The tray according to any one of claims 1 to 4, wherein the bracing ribs extend only part way up a pair of side walls of the respective channel from a valley or base thereof.

6. The tray according to any one of claims 1 to 5, wherein each rib comprises an acute isosceles tetrahedron.

7. The tray according to any one of claims 1 to 6, wherein a vertex angle of each triangle within the tetrahedron rib comprises between approximately 20 degrees and approximately 30 degrees.

8. The tray according to any one of claims 1 to 7, wherein one edge of each bracing rib corresponds with the valley or base of the channel.

9. The tray according to claim 8 when dependent upon 6 or 7, wherein a short edge formed by two bases of the isosceles triangles therein corresponds with the valley or base of the channel.

10. The tray according to any one of claims 1 to 9, wherein two triangular faces of each bracing rib form part of the side walls of the channel and two triangular faces of each bracing rib are exposed.

11. The tray according to any one of claims 1 to 10, wherein the bracing ribs comprise a hollow in an underside thereof.

12. The tray according to any one of claims 1 to 11, wherein the trays are configured to be closely nested with at least one another such tray.

13. The tray according to any one of claims 1 to 12, wherein one or more channels comprise a pair of apertures arranged either side of the respective bracing rib.

14. The tray according to any one of claims 7 to 13, wherein the side walls of the channel comprise equal pitch depending downwardly from the top wall of the tray to create an angle that is the same as that provided by the vertex angle.

15. The tray according to any one of claims 1 to 14, wherein the side walls converge in the valley or base before they reach the level of the bases of the compartments.
